(19) Europäisches Patentamt

European Patent Office

Office européen des brevets

(11) EP 0 592 288 B1

(12) **FASCICULE DE BREVET EUROPEEN**

(45) Date de publication et mention
de la délivrance du brevet:
**08.05.1996 Bulletin 1996/19**

(51) Int. Cl.$^6$: **B60T 8/00**

(21) Numéro de dépôt: **93402403.5**

(22) Date de dépôt: **01.10.1993**

(54) **Procédé de freinage**

Bremsverfahren

Brake control procedure

(84) Etats contractants désignés:
**DE ES FR GB IT SE**

(30) Priorité: **06.10.1992 FR 9211817**

(43) Date de publication de la demande:
**13.04.1994 Bulletin 1994/15**

(73) Titulaire: **THOMSON-CSF**
**F-75008 Paris (FR)**

(72) Inventeur: **Chabbert, Philippe**
**F-92402 Courbevoie Cedex (FR)**

(74) Mandataire: **Benoit, Monique et al**
**THOMSON-CSF**
**SCPI**
**B.P. 329**
**50, rue Jean-Pierre Timbaud**
**F-92402 Courbevoie Cédex (FR)**

(56) Documents cités:
**EP-A- 0 264 855**   **EP-A- 0 297 485**
**WO-A-85/02590**   **DE-A- 3 729 963**
**DE-A- 4 017 889**   **FR-A- 2 660 270**
**US-A- 3 508 795**   **US-A- 4 842 342**

**Description**

La présente invention concerne un procédé de freinage de roues au contact d'une piste, en particulier mais non exclusivement de roues de véhicules, par asservissement du couple de freinage appliqué sur chacune des roues du véhicule. Elle concerne plus particulièrement les procédés dans lesquels on cherche à positionner la valeur du couple de freinage au maximum possible compte tenu de l'adhérence de la roue à la piste.

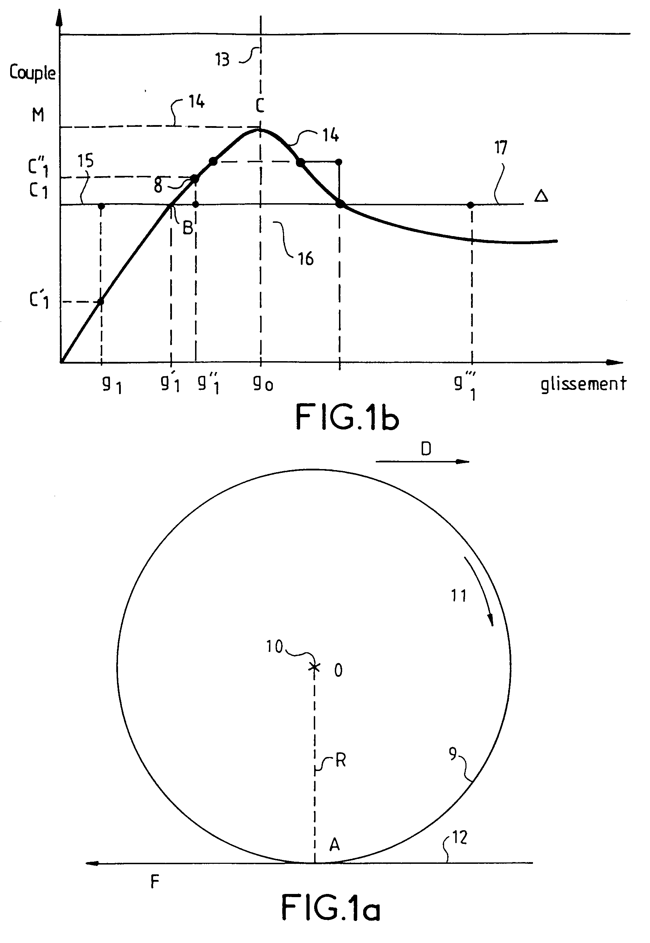

La demande de brevet n° FR-A-2 682 922 du 23 octobre 1991 décrit un procédé et un dispositif destiné à un tel usage. On sait selon cette demande que le couple maximum que peut exercer une piste sur une roue subissant une force de freinage a une valeur qui dépend du glissement de la roue sur la piste. La valeur de ce couple en fonction du glissement a pour une roue telle que représentée schématiquement figure 1a, l'allure de la courbe 8 représentée figure 1b.

La figure 1a représente schématiquement le profil d'une roue 9, solidaire par un axe 10, situé au centre O de la roue d'un véhicule non représenté. La roue tourne avec une vitesse $\omega$ exprimée en radians par seconde dans le sens représenté par la flèche 11. Les forces d'adhérence de la roue à une piste 12, matérialisée schématiquement par une ligne créent une force au niveau du point A de contact entre la roue 9 et la piste 12. Lorsqu' un couple de freinage est exercé sur la roue, le couple tendant à diminuer la vitesse $\omega$, les forces d'adhérence F créent un couple opposé, pour la roue. La courbe 8 de la figure 1b représente l'allure de la valeur maximum du couple opposable créé sur la roue par les forces d'adhérence entre la roue 9 et la piste 12, en fonction de la valeur du glissement de la roue.

Ce couple a pour valeur F x R, R désignant le rayon de la roue.

La courbe 8 de la figure 1b montre que ce couple passe par une valeur maximum M pour une valeur de glissement $g_o$. Cette valeur de glissement caractérise le maximum de la valeur du couple de freinage que l'on peut appliquer efficacement à la roue. Le point correspondant de la courbe 8 de coordonnées $g_o$ M est repéré C.

Dans la demande de brevet FR-A-2 682 922 déjà citée il est décrit un procédé et un dispositif visant à conduire le freinage de façon à ce que le glissement reste autour de la valeur $g_o$ permettant d'appliquer avec efficacité un couple de freinage maximum.

Par ailleurs le brevet EP-A- 297 485 divulgue un dispositif anti-blocage de roues fonctionnant selon les principes de la logique floue. Toutefois le dispositif décrit dans ce brevet n'est pas destiné à centrer le freinage en conservant le glissement autour de la valeur go. Il s'agit seulement d'un dispositif anti-blocage. Comme expliqué page 8, lignes 32-34, la valeur du glissement est de façon itérative comparée à une valeur seuil. Le dispositif anti-blocage est déclenché lorsque la valeur du glissement est supérieure à cette valeur seuil.

Dans le dispositif décrit dans ce brevet le coefficient d'adhérence est estimé en mesurant la décélération de la vitesse de rotation de la roue en fonction du couple de freinage appliqué. L'intérêt principal du dispositif décrit dans ce brevet est comme expliqué lignes 45-50, page 10, de maintenir de bonnes conditions de freinage malgré des conditions d'adhérence localement variables.

La présente invention a pour objectif de réaliser un dispositif de commande et régulation efficace et bon marché permettant en fonction d'une valeur de commande de freinage d'appliquer à chacune des roues, le couple de freinage optimum M défini par la courbe 8 chaque fois que cela est nécessaire. "Chaque fois que cela est nécessaire " signifie chaque fois que la valeur commandée qui sera appelée par la suite "pression pédale" conduit à un couple supérieur au couple optimum que l'on peut obtenir compte tenu du glissement de la roue à ce moment, et cela quelle que soit la valeur d'adhérence.

Pour une bonne compréhension de l'invention il sera revenu ci-après sur ce qu'on entend par glissement et la façon dont on exprime le coefficient de glissement g, ainsi que sur la façon dont se déplace le point de fonctionnement lorsqu'on ne se trouve pas sur la courbe 8.

Le glissement est en général défini par un coefficient de glissement, g, exprimant le pourcentage représenté par la vitesse de glissement dans la vitesse totale du véhicule :

$$g = \frac{V_V \text{-} V_R}{V_V} \times 100\% = \left(1 - \frac{V_R}{V_V}\right) \times 100\% \qquad (1)$$

Dans la formule (1) ci-dessus $V_V$ est la vitesse du véhicule $V_R$ est la vitesse résultant de la vitesse de rotation $\omega$ de la roue ( VR = $\omega$R ).

Si l'on considère une droite $\Delta$ d'ordonnée $C_1$, inférieure au maximum M défini sur la courbe 8 par le point C d'abscisse $g_o$, cette droite traverse trois zones. La première zone 15, se trouve au dessus de la courbe 8 et à gauche d'une droite 13 d'abscisse $g_o$ représentée en pointillé, une deuxième zone 16 se trouve entre la courbe 8 et l'axe des abscisse et enfin une troisième zone 17 se trouve au dessus de la courbe 8 à droite de la droite 13 d'abscisse $g_o$.

Si à un moment où le glissement a une valeur $g_1$, telle que le point de coordonnées $g_1$, $C_1$ se trouve dans la zone 15, cela signifie que le couple de freinage est supérieur au couple maximum $C'_1$ que peuvent opposer les forces d'adhérence pour cette valeur de glissement. La vitesse de rotation $\omega$ de la roue correspondant à une vitesse de roulement

$V_R$ va diminuer plus vite que ne va diminuer la vitesse $V_V$ du véhicule et l'on va donc augmenter le glissement jusqu'à arriver au glissement $g'_1$ correspondant à l'abscisse du point B où la droite $\Delta$ croise pour la première fois la courbe 8. Ce point est un point d'équilibre où le couple produit par les forces d'adhérence est égal au couple exercé par les forces de freinage, le point de fonctionnement va donc se stabiliser au point B.

Si le couple $C_1$ est exercé alors que le glissement a la valeur $g''_1$ correspondant à un point de la droite $\Delta$ situé dans la zone 16, cela signifie que le couple $C_1$ est inférieur au couple $C''_1$ que peuvent opposer les forces d'adhérence pour cette valeur de glissement. La vitesse $\omega$ de la roue correspondant à la vitesse de roulement $V_R$ va diminuer moins vite que la vitesse $V_V$ du véhicule. Le glissement va diminuer jusqu'à revenir au point B.

Au passage il est remarqué que de façon générale si le coefficient de glissement diminue cela signifie que l'on se trouve à l'intérieur de la zone 16 qui est donc une zone où il est à coup sur possible d'accroître l'efficacité du freinage en augmentant le couple de freinage.

Si le couple de freinage $C_1$ est exercé alors que la valeur du glissement a la valeur $g'''_1$ en sorte que le point de coordonnées $C_1$, $g'''_1$ se trouve dans une zone où le couple de freinage est supérieur au couple que peuvent exercer les forces d'adhérence, la vitesse de rotation $\omega$ de la roue correspondant à la vitesse de roulement $V_R$ du véhicule va diminuer plus vite que la vitesse du véhicule et le glissement va augmenter. Dans un tel cas il conviendra si l'on veut arriver à un point d'équilibre d'où il soit possible d'augmenter à nouveau le couple de freinage jusqu'à atteindre une valeur voisine de sa valeur maximum, de diminuer le couple de freinage jusqu'à une valeur où l'on se trouve à l'intérieur de la zone 16, zone à l'intérieur de laquelle en augmentant progressivement le couple de freinage on peut atteindre le point de fonctionnement défini par le point C où l'efficacité du freinage est maximum.

On remarque que la zone 17 comprend toute la zone située au dessus d'une ligne 14 constituée par le segment de droite joignant le point de l'axe des ordonnées d'ordonnée M et le point C de coordonnée $(g_o.M)$ d'une part et la partie de courbe 8 située à droite du point C, d'autre part.

La courbe 8 a toujours sensiblement l'allure représentée figure 1b, mais les valeurs de M, $g_o$ et même la forme précise de la courbe, dépendent de la nature de la piste, en particulier de son revêtement, de la nature du bandage de roue et de nombreux autres paramètres tels que par exemple la pression de gonflage des pneus de la roue, la charge de la roue, les conditions météorologiques.

C'est pourquoi selon l'invention il est prévu pour obtenir l'efficacité maximum de freinage et fonctionner au voisinage du point C de la courbe 8 d'asservir le couple de freinage à des variables dépendant directement ou indirectement de la valeur du glissement de la roue.

Par variable dépendant directement ou indirectement du glissement de la roue on entend tout d'abord le glissement lui-même, et des valeurs représentant par rapport au glissement des dérivées par rapport à d'autre grandeurs telles que le temps ou la dérivée du couple de freinage par rapport au glissement. Les dérivées peuvent être d'ordre 1,2 ou d'avantage.

Il a été vu plus haut que les zones 15, 16, 17 existent toujours mais qu'elles sont variables en fonction de la situation de la courbe 8 dans le plan et de sa forme réelle, que l'on ne connaît que de façon approximative. Pour cette raison il a été choisi de traiter les variables dépendant du glissement en logique floue. De cette façon on prend d'avantage en compte la plage de valeurs à laquelle appartient la valeur réelle d'une variable plutôt que la valeur de la variable elle-même.

Si les variables d'entrée, leurs différentes plages, et les règles fixant les grandeurs de sortie en fonction des plages auxquelles appartiennent la valeur réelle des variables d'entrée sont bien choisies, les systèmes à logique floue permettent d'obtenir une excellente efficacité à un prix inférieur à un calculateur fonctionnant en P.I.D (Proportionnel, Intégral, Dérivée).

La régulation classique avec un P.I.D (Proportionnel Intégral Dérivé) nécessite l'application d'équations numériques linéaires. Ces équations doivent simuler aux mieux le comportement du système qu'elles régulent. Les limites du P.I.D. sont atteinte lorsque ces équations mathématiques doivent simuler des idées humaines ou subjectives ou lorsque le système physique devient trop complexe pour être modélisé avec précision (non-linéarités, dégradation des caractéristiques initiales,...) ou encore lorsque cette simulation serait réalisable, mais demanderait une équation pour chaque situation. C'est à ce niveau que la logique floue devient intéressante.

En effet, elle permet de définir des règles d'inférences s'approchant le plus des expériences ou des raisonnements humains.

Les explications données ci-dessus quant à la valeur du couple efficace maximum que l'on peut appliquer vont, avec l'utilisation d'un calculateur à logique floue, pouvoir être utilisées pour la définition de grandeurs d'entrée et de sortie d'un tel calculateur, ainsi que pour les définitions qualitatives des actions à exercer sur les valeurs de sortie pour chacune des combinaisons des grandeurs d'entrée. Il conviendra ensuite de définir une règle de "défusification" permettant de passer des actions qualitatives recommandées à des actions quantifiées.

Ce sont ces actions quantifiées qui détermineront la valeur réelle des grandeurs de sorties à l'intérieur des plages recommandées.

Selon l'invention les grandeurs d'entrée sont :

- la valeur du coefficient de glissement g de la roue sur la piste valeur définie par la formule (1) ci-avant ;
- la valeur de la dérivée du couple de freinage par rapport au glissement soit $\frac{\Delta c}{\Delta g}$ , $\Delta g$ et $\Delta c$ désignant les accroissements algébriques du glissement et du couple de freinage au cours d'une même petite période de temps. Il sera vu que dans un mode de réalisation cette période est de 5 ms. Cette valeur est donnée afin de définir mieux le qualificatif "petit". Cette valeur peut évidemment être plus petite ou plus grande. Il n'est pas obligatoire que cette valeur reste constante. En particulier il n'est pas exclu que la mesure de $\Delta g$ et $\Delta c$ soit effectuée de façon périodique à des moments où ces valeurs ont plus de signification qu'à d'autres, par exemple les moments où le poids exercé par le véhicule sur la roue est suffisant ;
- la valeur de la dérivée du glissement par rapport au temps soit $\frac{\Delta g}{\Delta t}$ ; $\Delta g$ désigne l'accroissement algébrique du glissement au cours du temps $\Delta t$, $\Delta t$ représente le temps écoulé depuis la précédente mesure de g.

Dans la suite de l'exposé la variable $\frac{\Delta c}{\Delta g}$ sera appelée la pente, ou la pente du glissement, le couple étant exprimé en newton-mètre la pente sera exprimée par un nombre obtenu par division de $\Delta g$ par $\Delta c$ et multiplication par 10.000. La dérivée du glissement par rapport au temps sera appelée dgliss. Elle sera exprimée par un nombre représentant l'accroissement de g au cours de périodes égales à 5 millisecondes.

La valeur de sortie du calculateur est la valeur de correction à appliquer au couple de freinage exercé par les moyens de freinage du véhicule sur la roue.

Les grandeurs d'entrée et sortie étant choisies, il va falloir conformément aux principes connus de la logique floue définir pour chaque grandeur d'entrée d'une part différentes plages qualitatives, le passage d'une plage à l'autre correspondant à un changement de l'action qualitative sur une grandeur de sortie, et d'autre part pour chacune des plages, le degré d'appartenance de chaque valeur particulière de la plage à cette plage. Selon un mode de réalisation de la présente invention la pente a été divisée en quatre plages, deux plages de pente faible, une plage de pente forte négative et une plage de pente forte positive. Les plages de pente faible sont celles qui sont au voisinage du point C de la courbe 8. On cherchera à travailler dans ces plages de pente et pour cela à exercer une action sur le couple de freinage tendant à ramener la valeur du coefficient de glissement autour de la valeur $g_o$.

La grandeur d'entrée glissement a été divisée en trois plages, une plage pour les petits glissement gliss-petit, une plage pour les glissement moyens gliss-moyen et une plage pour les glissements forts gliss-fort. La grandeur d'entrée dgliss a été divisée en deux plages Dgliss faible et dgliss fort.

La variable de sortie est une valeur de commande de variation de pression dans un organe appliquant des pièces de frottement sur une pièce liée à la roue par exemple une mâchoire de frein sur un disque cette grandeur est directement liée à la variation du couple de freinage par une relation mathématique connue. Elle sera par la suite assimilée à la variation du couple de freinage.

La variable pression a été divisée en 7 zones numérotées de 7 à 1. La variation de pression est une pression que l'on vient ajouter à la pression déjà existante. Les modifications de la pression sont appliquées avec la même fréquence que les fréquences de mesure des grandeurs d'entrée.

Les plages de pression 7 à 4 ont des valeurs négatives car le système fonctionne par retrait de pression à une pression initiale en général trop forte, c'est à dire correspondant à un couple de freinage situé au dessus du maximum M de la courbe 8. Les plages numérotés 3 et 2 sont des plages qui incluent la valeur 0 et sont dans leur ensemble voisine de 0, avec des valeurs majoritairement négatives pour la plage 3 et majoritairement positive pour la plage 2.

La logique du calculateur est conçue pour que la correction du couple de freinage reste dans des gammes de valeur comprise dans ces deux zones.

On veut dire par là que les plages 1 et 4 à 7 sont utilisées, en principe en phase transitoire au début du freinage, de façon à amener ou éventuellement ramener rapidement, dans le plan-couple de freinage, glissement, le point de fonctionnement des freins, au voisinage du point C;

Les zones 2 et 3 sont ensuite utilisées pour maintenir le point de fonctionnement dans ce voisinage.

La plage 1 correspond à des valeurs faiblement positives, car le freinage est comme expliqué plus haut essentiellement commandé par retrait à une pression initialement trop forte. Cette pression initiale est commandée par la valeur pression pédale. Dans le procédé selon l'invention la valeur de sortie du couple de pression modifié, est comparée à la valeur commandée, de façon à appliquer la valeur commandée lorsque cette dernière est inférieure à la valeur calculée. Les explications ci-dessus sont données pour faire comprendre que les variations de pressions positives calculées, représentées par la zone 1 de la valeur de sortie, peuvent conserver un niveau faible sans nuire au bon fonctionnement du freinage.

Les grandeurs d'entrées choisies ci-dessus, le nombre de plages qualitatives pour chacune des grandeurs d'entrée et le nombre de zones qualitatives pour la valeur de sortie sont donnés à titre d'exemple pour faciliter la compréhension. D'autres choix sont possibles sans sortie du champs de l'invention.

Pour chacune des plages des différentes grandeurs d'entrée et sortie, il est défini un coefficient d'appartenance de chaque valeur de la plage à cette plage.

Dans un plan repéré par deux axes de coordonnées, l'axe des abscisses portant les valeurs de la grandeur et l'axe des ordonnées portant les valeurs des coefficients d'appartenance, les plages et leurs coefficients d'appartenance sont représentés d'une part par un segment sur l'axe des abscisses et d'autre part, par un arc de courbe dont l'ordonnée est une valeur comprise entre 0 et 1. Les extrémités du segment définissent les abscisses des limites de chaque plage. Les abscisses des extrémités du segment sont aussi les abscisses des extrémités de l'arc de courbe représentant le coefficient d'appartenance d'une valeur de la plage à la plage.

Les règles permettant de passer d'un ensemble de plages qualitatives d'entrée, ces plages étant définies par l'appartenance d'une valeur réelle d'entrée à la plage, à une zone de valeur de sortie seront maintenant explicitées.

Dans l'exemple de réalisation de la présente invention il y a trois variables d'entrée et une seule grandeur de sortie.

Il est donc possible de définir un espace à trois dimensions par un système d'axes de coordonnées où chaque axe correspond à une grandeur d'entrée et porte les différentes plages qualitatives des grandeurs d'entrée précédemment définies. Bien que les plages qualitatives d'une grandeur telles qu'elles ont été définies plus haut puissent avoir entre elles des zones de recouvrement il est précisé à toutes fins utiles que les plages qualitatives définies sur chaque axe de l'espace à trois dimensions sont des plages qui correspondent uniquement à une valeur qualitative de chaque variable d'entrée. Elles sont donc sans recouvrement. Il est précisé également que cette représentation n'est pas obligatoire. Elle vise uniquement à faciliter la compréhension des règles qui seront appliquées.

Deux plages ayant été définies sur la grandeur dgliss, l'axe dgliss portera deux segments représentant chacun une de ces plages. De même l'axe glissement portera 3 segments et l'axe pente 4 segments. Ces différents segments permettent de définir 4x3x2=24 cubes de l'espace à trois dimensions créé ; chaque cube correspond ainsi à une seule combinaison de plages qualitatives des trois variables d'entrée et l'ensemble des 24 cubes représente l'ensemble des combinaisons possibles. Une combinaison particulière de valeurs réelles de variables d'entrée, les valeurs d'entrée mesurées à un instant, désigne un, ou plusieurs cubes si une variable appartient simultanément à plusieurs plages. Les valeurs qualitatives de la grandeur de sortie contenues dans ces cubes constituent les valeurs qualitatives désignées de la grandeur de sortie.

Pour chacun de ces cubes où chaque valeur d'entrée n'appartient qu'à une seule plage, il faut définir une zone qualitative de sortie de la grandeur de sortie. On remarque à nouveau à ce stade, que en raison du recouvrement possible des plages des valeurs d'entrée une même valeur de grandeur d'entrée peut être présente sur plusieurs plages qualitatives.

Il s'ensuit qu'un ensemble de trois valeurs réelles d'entrée peut conduire à plusieurs des 24 cubes de l'espace à trois dimensions. Chacun des cubes auxquels on arrive ne contient qu'une seule valeur qualitative de la variable de sortie mais chacun des cubes ainsi désignés, peut contenir une zone de valeurs de sortie identique ou différente des autres zones désignées se trouvant dans les autres cubes correspondant aux trois valeurs des grandeurs d'entrée. Même si un seul des 24 cubes est désigné par les 3 valeurs d'entrée la valeur de la grandeur de sortie contenue dans ce cube est une valeur qualitative qu'il faudra transformer en une valeur quantifiée. Déterminer une valeur quantifiée pour la grandeur de sortie lorsque l'exploitation des règles qualitatives conduit à une ou plusieurs valeurs qualitatives des valeurs de la grandeur de sortie, tel est l'objet des règles de "défusification" dont il sera parlé après la définition de la répartition des grandeurs de sortie dans les 24 cubes de l'espace à trois dimensions. Cette répartition est définie par la présence d'un chiffre compris entre 1 et 7 dans chacun des 24 cubes. Les cubes correspondant respectivement à un dgliss fort et à un dgliss faible définissent chacun un espace à deux dimensions (pente et glissement) permettant de constituer deux matrices.

La matrice correspondant à un dgliss fort est uniformément remplie de 7, c'est à dire qu'il faut enlever le plus possible de pression. Cette matrice permet de limiter la vitesse de montée du glissement autant dans la zone de pente positive que dans celle de pente négative. Dans la zone de pente positive, cette règle permet de ne pas passer le sommet C trop rapidement et dans la zone de pente négative, elle permet de ne pas aller trop loin dans les grandes valeurs de glissement.

La deuxième matrice correspond à des variations de glissement plus faibles. Pour cette matrice, les règles suivantes s'appliquent :

Si le glissement est très grand (3ième ligne de la matrice) alors, peu importe la valeur de la pente, il faut enlever beaucoup de pression (mais moins que lors d'un départ au blocage déclenché par dgliss fort) grâce à la zone 6 (pression- - - -).

Si le glissement est moyen (2ème ligne de la matrice) alors il faut encore enlever de la pression quelque soit la pente. Il faut en enlever un peu moins car nous nous rapprochons du maximum M donc zone 5 (pression- - - ).

Si le glissement est petit (1 ère ligne de la matrice), c'est à dire dans la zone normale, alors la valeur de la pente peut intervenir .

Si la pente est très négative (pente - -) alors il faut enlever de la pression, mais modérément, donc zone 4 (pression - - ).

Si la pente est négative (pente -) alors il faut enlever un peu de pression donc zone 3 (pression -).

Si la pente est positive (pente +) alors il faut ajouter un peu de pression donc zone 2 (pression +).

Si la pente est très positive (pente + +) alors il faut ajouter beaucoup de pression donc zone 1 (pression + +).

Le régulateur doit en fait se stabiliser entre les zones 2 et 3 pour maintenir des variations de pression faibles et rester autour du maximum.

Les règles de "défusification" vont maintenant être explicitées. Ces règles font intervenir les coefficients d'appartenance des variables d'entrée. Elles font intervenir également un coefficient de poids pour chacune des valeurs qualitatives de sortie désignées par les valeurs réelles des grandeurs d'entrée.

La règle retenue est que chaque zone désignée de valeurs de sortie intervient avec un coefficient de poids qui est égal à la valeur du plus petit des coefficients d'appartenance des trois grandeurs d'entrée conduisant à cette zone. Cette règle est applicable directement aux valeurs qualitatives de pression 1, 2, 3 et 4 qui, ne figurant que dans un seul des 24 cubes, ne peuvent être désignées qu'une fois. Il peut arriver par contre que les valeurs qualitatives 5, 6, 7 qui figurent dans plusieurs cubes soient désignées plusieurs fois. Dans ce cas on examinera pour chaque cube quel est le coefficient d'appartenance de chacune des trois grandeurs d'entrée qui est le plus petit et l'on retiendra parmi les coefficients ainsi sélectionnés le plus grand. C'est ce plus grand des coefficients les plus petits qui sera égal au coefficient de poids de la valeur qualitative. La notion de coefficient de poids sera maintenant précisée par l'usage qui en est fait pour arriver à partir des valeurs qualitatives désignées et de leurs coefficient de poids à une valeur quantifiée de sortie. Il faut maintenant se situer dans le plan,- zone de valeur des variations de pressions de sortie, coefficient d'appartenance à ces zones -. Si l'on attribue à ce plan un poids uniforme par unité de surface, le poids de chaque zone est définit comme le poids de la partie de plan limitée par l'axe des abscisses, la courbe définissant le coefficient d'appartenance de chaque valeur de la zone à la zone, une droite parallèle à l'axe des abscisses et à une distance de celui-ci égale au coefficient de poids retenu pour la zone en fonction des coefficients d'appartenance des variables d'entrée comme expliqué plus haut, et éventuellement par des perpendiculaires à l'axe des abscisses menées par les points extrêmes de la zone.

La valeur quantifiée de sortie est égale à l'abscisse du centre de gravité de l'ensemble des surfaces ci-dessus définies.

En résumé l'invention est relative à un procédé de contrôle de la valeur d'un couple de freinage d'une roue rotationnellement liée à un véhicule appuyant la roue sur une piste, les forces d'adhérence entre la roue et la piste étant capables de provoquer un couple de rotation de la roue opposé au couple de freinage dont la valeur maximum est à chaque instant une fonction d'un coefficient de glissement g de la roue sur la piste, la valeur de ce maximum étant représentable en fonction du coefficient de glissement par une courbe d'adhérence présentant elle-même en un point C un maximum M pour une valeur $g_o$ du coefficient de glissement, le procédé comportant :

- le calcul de façon itérative, selon les principes de la logique floue d'une grandeur de sortie représentant un accroissement algébrique d'une valeur précédente du couple de freinage, cet accroissement étant ajouté à la valeur précédente du couple de freinage pour déterminer une valeur corrigée du couple de freinage, une première valeur du couple étant constituée par une valeur de commande, le calcul étant effectué à partir de trois grandeurs d'entrée comportant la valeur du coefficient de glissement de la roue sur la piste, une grandeur pente p représentant la dérivée du couple de freinage par rapport au glissement, une grandeur dgliss dérivée première du glissement par rapport au temps ;
- la comparaison de la valeur corrigée du couple de freinage à la valeur de commande de ce couple ;
- la limitation si nécessaire du dernier accroissement calculé pour qu'une valeur calculée du couple résultant de l'addition de l'accroissement calculé, éventuellement limité, soit au plus égal à la valeur de commande ;
- l'application de la valeur calculée à un organe de freinage, le calcul, la comparaison, la limitation éventuelle et l'application intervenant à l'issue d'une phase préliminaire à l'utilisation du procédé comportant :
- la fixation pour chaque grandeur d'entrée d'un nombre de plages qualitatives continues, et, d'un nombre de zones qualitatives continues pour la grandeur de sortie, chacune des plages ou zones comprenant toutes les valeurs allant d'une valeur minimum à une valeur maximum, ces deux valeurs constituant les extrémités de la plage ou zone ;
- l'affectation d'un coefficient d'appartenance compris entre 0 et 1 à chaque valeur de chaque plage ou zone ;
- l'affectation à chaque combinaison de trois plages que l'on peut constituer avec une plage de chacune des trois valeurs d'entrée d'un nombre identifiant une des zones qualitative de la valeur de sortie ;
- l'affectation à chaque zone de la valeur de sortie d'un poids qui est une grandeur proportionnelle à une surface délimitée par un segment dont la longueur est égale à la longueur de la zone, une courbe représentant dans une direction perpendiculaire au segment la valeur du coefficient d'appartenance à la zone de chaque valeur du segment, et éventuellement par des perpendiculaires au segment menées à ses extrémités ;
- la définition d'une règle pour déterminer une valeur quantifiée de sortie à partir des zones qualitatives désignées par chacune des combinaisons que l'on peut constituer avec une plage à laquelle appartient chacune des trois valeurs d'entrée mesurées au cours de l'exécution ultérieure du procédé, la règle stipulant que la valeur quantifiée est une fonction du poids de chacune des zones désignées et pour chacune d'elle d'un coefficient de poids qui est lui même une fonction des coefficients d'appartenances de chaque valeur réelle mesurée à la plage participant à la combinaison désignant la zone qualitative de sortie.

Les grandeurs d'entrée sont le coefficient de glissement de la roue g, des dérivées de ce coefficient par rapport au temps et des dérivées du couple de freinage par rapport au glissement.

La phase préliminaire comporte :

- la fixation pour chaque grandeur d'entrée d'un nombre de plages qualitatives continues et d'un nombre de zones qualitatives continues pour la grandeur de sortie, chacune des plages ou zones comprenant toutes les valeurs allant d'une valeur minimum à une valeur maximum, ces deux valeurs constituant les extrémités de la plage ou zone ;
- l'affectation d'un coefficient d'appartenance compris entre 0 et 1 à chaque valeur de chaque plage ou zone ;
- l'affectation à chaque combinaison de trois plages que l'on peut constituer avec une plage de chacune des valeurs d'entrée d'un nombre identifiant une des zones qualitatives de la valeur de sortie ;
- l'affectation à chaque zone de la valeur de sortie d'un poids qui est une grandeur proportionnelle à une surface délimitée par un segment dont la longueur est égale à la longueur de la zone, une courbe représentant dans une direction perpendiculaire au segment la valeur du coefficient d'appartenance à la zone de chaque valeur du segment, et éventuellement par des perpendiculaires au segment menées à ses extrémités ;
- la définition d'une règle pour déterminer une valeur quantifiée de sortie à partir des zones qualitatives désignées par chacune des combinaisons que l'on peut constituer avec une plage à laquelle appartient chacune des trois valeurs d'entrée mesurées au cours de l'exécution ultérieure du procédé, la règle stipulant que la valeur quantifiée est une fonction du poids de chacune des zones désignées et pour chacune d'elle d'un coefficient de poids qui est lui même une fonction des coefficients d'appartenances de chaque valeur réelle mesurée à la plage participant à la combinaison désignant la zone qualitative de sortie.

Les mots "plages" et "zones" désignent les mêmes entités c'est-à-dire une suite continue de valeurs comprises entre deux valeurs extrêmes. Pour faciliter la compréhension il a été choisi dans toute la description de réserver le mot "plage" aux valeurs d'entrée et le mot "zone" aux valeurs de sortie.

Dans le mode préféré de réalisation les grandeurs d'entrée sont une grandeur dgliss, dérivée première du glissement par rapport au temps, cette valeur étant répartie en deux plages, une grandeur appelée pente, dérivée première du couple de freinage par rapport au glissement, divisée en quatre plages et le coefficient de glissement qui lui, a été réparti en trois plages.

La grandeur de sortie est la variation par rapport à une valeur précédente du couple de freinage qui a été répartie en sept zones numérotées par zones de valeurs algébriques croissantes de 7 à 1. Par zones de valeurs croissantes on veut dire que la valeur milieu, de chaque zone, valeur moyenne des deux valeurs extrêmes de la zone va en croissant de la zone 7 à la zone 1.

Un exemple et des variantes de réalisation seront maintenant décrits en référence aux dessins annexés dans lesquels :

- les figures 1a et 1b sont des schémas destinés à expliquer le principe du fonctionnement de l'invention ;
- les figures 2 à 5 représentent les plages et zones des grandeurs d'entrée et sortie ;
- les figures 6 et 7 sont destinées à illustrer sur un exemple le mode de calcul d'une valeur quantifiée de sortie à partir des valeurs réelles des variables d'entrée ;

Les figures 1a et 1b ont été commentées plus haut.

Un exemple de réalisation du procédé selon l'invention sera maintenant décrit. Les trois grandeurs d'entrée sont dans cet exemple, le coefficient de glissement, la pente, dérivée du coefficient de glissement par rapport au couple de freinages et la variable dgliss dérivée du coefficient de glissement par rapport au temps.

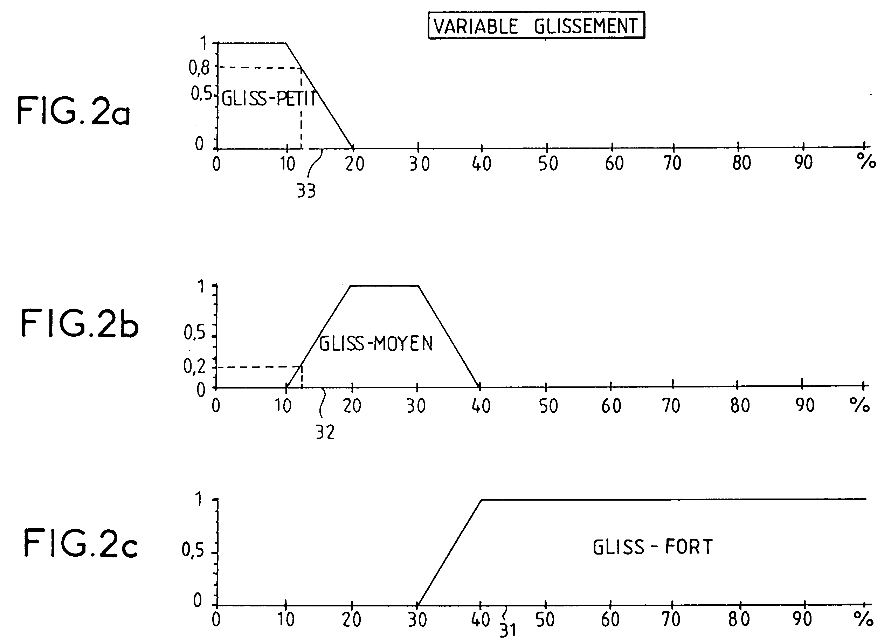

Les plages qualitatives et les coefficients d'appartenance à ces plages sont explicités ci-après et matérialisés sur les figures 2 à 5 respectivement.

La grandeur glissement a été répartie en trois plages représentées figures 2a à 2c.

La courbe représentant la valeur du coefficient d'appartenance de chaque valeur de la plage est également représentée sur ces figures. Les trois zones portent des numéros de référence 33 à 31.

La première plage (gliss-petit) a un coefficient d'appartenance à la valeur 1 pour un glissement compris entre 0 et 10 %. Ce coefficient décroît ensuite linéairement vers la valeur 0 atteinte pour g = 20 %.

Cette zone couvre en principe toutes les adhérences normales, c'est-à-dire celles dont le glissement optimum se trouve à l'intérieur de la zone. Si on rencontre des surfaces un peu particulières où le g optimum est supérieur à 10 %, alors le régulateur risque de réguler sur une mauvaise valeur de glissement ou même, de devenir instable.

Les deux autres plages (gliss-moyen et gliss-fort) déclenchent des règles qui réduisent plus ou moins fortement la pression dans les freins afin de revenir dans la première plage. Les valeurs extrêmes à attribuer à ces plages ne sont pas très importantes, elles n'influent pas beaucoup sur le rendement de la régulation (pour un régulateur plus simple, on pourrait même se limiter à une seule plage englobant les deux).

La plage gliss-moyen va des valeurs extrêmes 10 % à 40 %. Le coefficient d'appartenance croît linéairement de 0 à 1 entre 10 et 20 % reste à 1 entre 20 et 30 % et décroît ensuite linéairement de 1 à 0 entre 30 et 40 %.

La plage gliss-fort va de 30 % à 100 %. Le coefficient d'appartenance croît linéairement de 0 à 1 entre 30 et 40 % et reste à 1 ensuite.

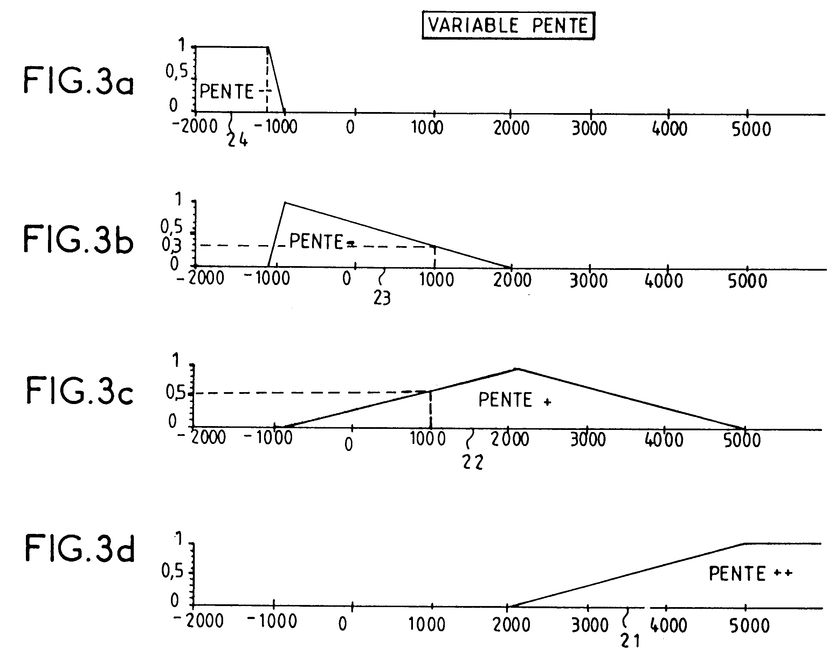

En ce qui concerne la valeur pente, il a été créé quatre plages. Les valeurs de ces plages et les courbes représentant les coefficients d'appartenance des valeurs de ces plages sont représentées figures 3a à 3d. Une première plage dite pente --,(p--) repérée 24 se situe entièrement dans les pentes négatives entre -2000 et -900.

Le coefficient d'appartenance est à 1 entre -2000 et -1000 et décroît linéairement de 1 à 0 entre -1000 et -900.

Une deuxième plage dite "pente -", (p-) repérée 23 va de -1100 à +2000. Le coefficient d'appartenance croît de 0 à 1 entre -1100 et -900 et décroît linéairement vers 0 de -900 à 2000.

Une troisième plage repérée 22 dite "pente +",(p+) va de -900 à +5000, le coefficient d'appartenance à la plage croissant de 0 à 1 entre -900 et +2000 et décroissant ensuite jusqu'à 0 entre 2000 et 5000.

Enfin, une quatrième plage dite "pente++", (p++) repérée 21 comprend les valeurs supérieures à 2000. Le coefficient d'appartenance à cette plage croît de 0 à 1 entre 2000 et 5000 et reste à la valeur 1 ensuite.

On remarque que lorsque l'on veut réguler le couple de freinage de façon à rester au voisinage du point C de la courbe 8, on doit travailler au voisinage des pentes nulles. Il a été relevé sur des courbes réelles que lorsque g est inférieur à la valeur optimum de glissement $g_o$ la pente varie de 40000 environ à 0 et varie ensuite de 0 à -3000 lorsque g est supérieur à $g_o$. Il s'ensuit qu'une valeur de p = -1000 par exemple est située beaucoup plus loin de $g_o$ qu'une pente de +1000. Pour cette raison les plages pente + et pente - qui sont les deux plages où l'on cherche à se ramener, de façon à rester au voisinage de C, ne sont pas symétriques par rapport à 0. En particulier, le point d'intersection de ces deux plages, c'est-à-dire la valeur pour laquelle le coefficient d'appartenance de chacune des plages à la valeur 0,5, ne se situe pas en p = 0 comme ce serait le cas si les plages étaient symétriques, mais à une valeur pour laquelle p = 500.

Ceci est équivalent à entrer une consigne de pente de +500 au lieu de zéro. Ceci n'influe pas beaucoup sur la régulation, au contraire, cela force le régulateur à rester un peu plus du côté de la zone stable (p > 0).

Les deux autres zones (p++ et p--) sont les compléments des deux premières pour les pentes plus importantes (cf. figure 3).

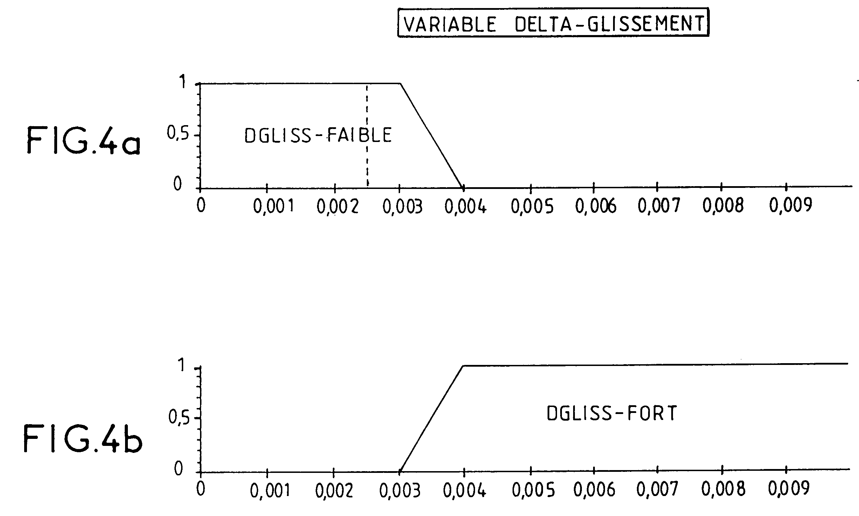

Un régulateur avec seulement les deux variables d'entrées définies précédemment pourrait se suffire à lui-même. En revanche, il serait beaucoup trop lent et surtout, compte tenu du fait que, dès que la roue arrive dans la plage des pentes négatives, elle part très vite au blocage, il faut pouvoir anticiper sur la régulation permanente lors des transitoires de départ ou des changements d'adhérence. Ceci a été réalisé en ajoutant une variable d'entrée, la dérivée du glissement par rapport au temps (dgliss) qui indique si le glissement est en train de monter anormalement vite. Dans ce cas, on peut anticiper pour réduire la pression dans les freins. Ceci conduit à créer deux plages de dgliss représentées avec leurs courbes d'appartenance figures 4a et 4b.

La première plage (dgliss faible) est celle où la variation de glissement est considérée comme normale. C'est dans cette plage que le régulateur fonctionne en régime permanent. Elle va des valeurs extrêmes 0 à 0,004. Le coefficient d'appartenance à cette plage est à 1 entre 0 et 0,003 et décroît jusqu'à 0 de 0,003 à 0,004.

La deuxième plage (dgliss fort) est celle qui déclenche une réduction brutale de la pression dans les freins. Elle comporte les valeurs supérieures à 0,003. Le coefficient d'appartenance va de 0 à 1 entre 0,003 et 0,004 et reste à 1 ensuite. Le croisement avec dgliss faible a lieu pour la valeur 0,0035. Le réglage des valeurs extrêmes et du point de croisement a été effectué par simulation. Le point d'intersection entre les deux plages doit être tel que la réduction de pression s'opère au bon moment, lorsque la pression est établie à son maximum lors de la phase transitoire de début du freinage. Ce réglage dépend du réglage de la grandeur de sortie et il faut donc procéder de façon itérative.

La grandeur de sortie est un accroissement algébrique de pression qu'il faut ajouter à la pression actuelle dans les freins pour réguler le système. Il faut donc, pour que le système soit stable, qu'il fournisse une sortie nulle quand on est au sommet C de la courbe 8. Pour cela, il faut créer deux zones de pression symétriques par rapport à 0, qui se déclencheront sur les zones de faible pente (pente + et pente -). Ceci permet d'avoir un centre de gravité situé en zéro. Les autres zones permettent de revenir vers la zone stable (p+ et p-) du régulateur. Plus une zone est éloignée de 0, plus son influence sera grande et engendrera une variation de pression importante.

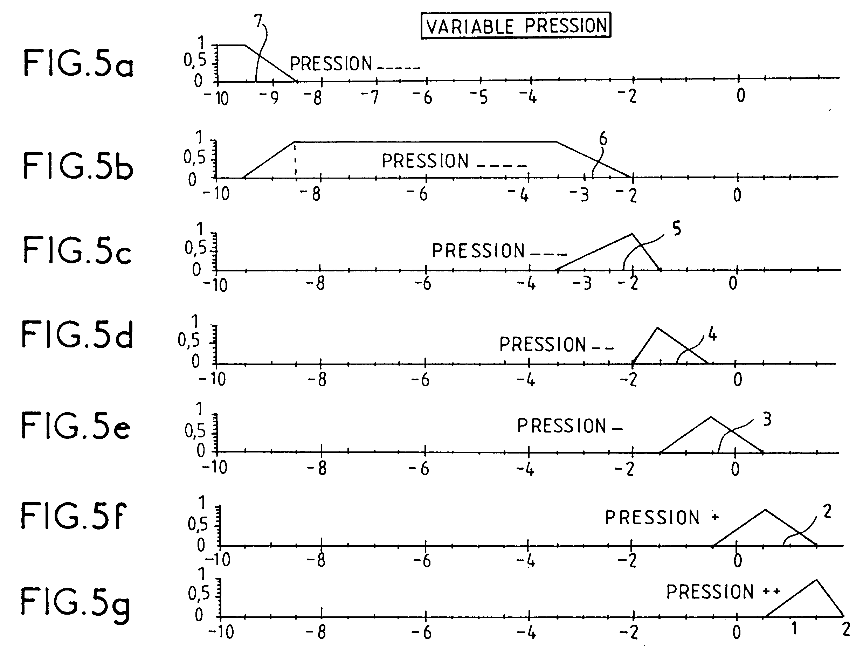

Les zones de valeurs de pression ont été représentées ainsi que leurs coefficients d'appartenance figures 5a à 5g. Les valeurs portées en abcisse sont des pressions exprimées en hectokilopascals (100.000 pascals). Ces valeurs correspondent à des valeurs de couple de freinage comme expliqué plus haut. Sept zones ont été créées.

La première zone, repérée 7, correspond à une variation de pression allant de -10 à -8,5, appelée pression - - - - - . Le coefficient d'appartenance à cette zone a la valeur 1 de -10 à -9,5 puis décroît linéairement jusqu'à 0 de -9,5 à -8,5.

La deuxième zone repérée 6 et appelée pression - - - - va de -9,5 à -2. Le coefficient d'appartenance croît de 0 à 1 entre -9,5 et -8,5, reste à 1 de -8,5 à -3,5 et décroît jusqu'à 0 entre -3,5 et -2.

La troisième zone repérée 5 et appelée pression - - - va de -3,5 à -1,5, le coefficient d'appartenance croissant de 0 à 1 entre -3,5 et -2 puis décroissant à nouveau jusqu'à 0 entre -2 et -1,5.

La quatrième zone repérée 4 et appelée pression - - va de -2 à -0,5, le coefficient d'appartenance croissant de 0 à 1 entre -2 et -1,5 puis décroissant de 1 à 0 entre -1,5 et -0,5.

La cinquième zone repérée 3 et appelée pression - va de -1,5 à +0,5 le coefficient d'appartenance à cette zone croissant de 0 à 1 entre -1,5 et -0,5 et décroissant ensuite de -0,5 à +0,5.

La sixième zone repérée 2 et appelée pression + va de -0,5 à +1,5, le coefficient d'appartenance croissant de 0 à 1 entre -0,5 et +0,5 et décroissant ensuite de +0,5 à +1,5. On observe que les zones 3 et 2 sont symétriques. Les coefficients d'appartenance à ces zones ont la valeur 0,5 pour un accroissement de pression nul. C'est dans ces deux zones que l'on cherche à se ramener.

Les valeurs portées dans ces deux zones sont assez faibles pour ne pas créer de grosses variations de pression qui risqueraient de déstabiliser le freinage. Les variations de pression des autres zones ont pour but de ramener rapidement dans ces deux zones de travail. La limite inférieure de la zone 7 a été reculée jusqu'à ce que la taille et donc la position du centre de gravité et le poids de la zone soient suffisants pour limiter la pression lors de la phase transitoire de début de freinage.

La septième zone repérée 1 et appelée pression 2+ va de 0,5 à 2, le coefficient d'appartenance allant de 0 à 1 entre 0,5 et 1,5 et décroissant de 1 à 0 entre 1,5 et 2.

On remarque que les courbes d'appartenance tant pour les entrées et la sortie sont constituées de deux ou trois segments de droites dont un dans ce dernier cas est à la distance 1 de l'axe des abscisses. Cette façon de faire présente l'avantage d'une grande simplicité pour la définition des courbes. Quatre points suffisent à définir une courbe, les deux points extrêmes de la zone ou plage et les deux valeurs extrêmes ayant le coefficient d'appartenance 1, ces deux derniers points pouvant être confondus. On pourrait obtenir probablement de meilleurs résultats avec des courbes de variation du coefficient d'appartenance entre 0 et 1 ou 1 et 0 qui rejoignent tangentiellement l'axe des abscisses ou la droite d'ordonnée 1.

Après avoir défini les variables d'entrée, de sortie, et les courbes d'appartenance, il faut définir les règles qualitatives que le régulateur doit suivre. Elles sont de la forme :

si entrée qualitative 1 = a
si entrée qualitative 2 = b
si entrée qualitative 3 = c
alors sortie = d

Chaque règle a pour sortie l'une des zones qualitatives de la grandeur de sortie. Ces règles ont été définies précédemment.

La règle de "défusification" qui permet de passer d'une valeur qualitative à une valeur quantitative a été définie précédemment. Elle sera illustrée ci-après à l'aide d'un exemple.

Pour cet exemple, on se reportera aux figures 2 à 5 sur lesquelles une valeur réelle a été fixée pour chaque variable.

Sur la figure 2, le coefficient de glissement a été fixé à la valeur 12 %. Cette valeur appartient à la plage gliss-petit avec le coefficient d'appartenance 0,8 et à la plage gliss-fort avec le coefficient d'appartenance 0,2. La pente (figure 3) a été fixée à 1000. Cette valeur appartient à la plage pente - 23 avec le coefficient d'appartenance 0,3 et à la plage 22 pente + avec le coefficient d'appartenance 0,5. La variation de glissement a été fixée à 0,0025 soit la plage dgliss faible avec un coefficient d'appartenance à 1.

On rappelle que l'application des règles conduit aux zones qualitatives de sortie ci-après :

1) Pour un dgliss fort toutes les sorties sont à 7 quel que soit la pente ou le glissement.
2) Pour un dgliss faible

- toutes les sorties sont à 6 quelle que soit la pente si le glissement est fort (plage 31)
- toutes les sorties sont à 5, quelle que soit la pente si le glissement est moyen (plage 32)
- si le glissement est petit (plage 33), la sortie est à 4 si la pente est dans la zone 24, 3 si elle est dans la zone 23, 2 dans la zone 22 et 1 dans la zone 21.

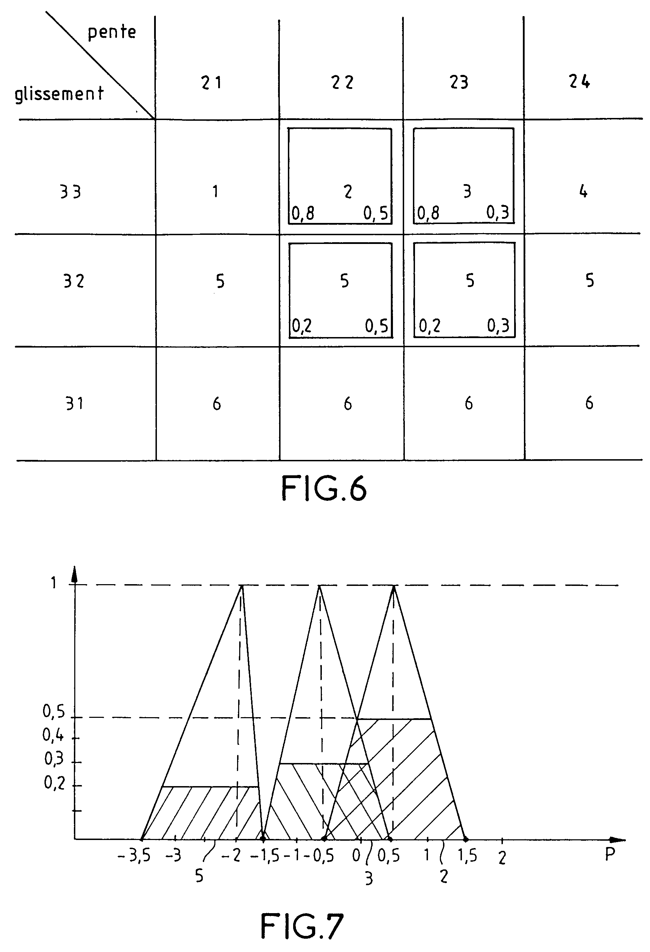

Pour l'exemple considéré, on se trouve dans la plage dgliss faible correspondant à la matrice représentée figure 6. Le glissement appartient aux plages 33, 32 et la pente aux plages 22, 23. Les quatre cases situées au croisement des colonnes 22, 23 et des lignes 33, 32 sont désignées, soit les valeurs de sorties 2, 3 et la valeur 5 qui est désignée deux fois.

Les coefficients d'appartenance sont pour le glissement de 0,8 et 0,2 et pour la pente de 0,5 et 0,3 valeurs qui sont reportées dans les cases correspondantes de la figure 6.

Sur la figure 7, on a reporté les zones de sortie 2, 3, 5 et leurs courbes d'appartenance. Sur cette figure le poids de chaque zone est défini par le poids de la surface de plan (supposée uniformément pesante) compris entre le segment définissant la zone et la courbe d'appartenance à cette zone. L'application des règles de "défusification" va conduire à définir pour ces zones un coefficient de poids.

Pour la zone 5, désignée deux fois, le plus grand des plus petits coefficients d'appartenance est 0,2. Pour cet exemple, le poids retenu pour la zone 5 est le poids de la surface limitée par le segment définissant la zone, la courbe d'appartenance et la parallèle à l'axe des abscisses d'ordonnée 0,2. Cette surface est hachurée figure 7. De même pour cet exemple, le poids retenu pour la zone 3 est le poids de la surface limitée par le segment définissant la zone, la courbe d'appartenance et la parallèle à l'axe des abscisses d'ordonnée 0,3 car 0,3 est le plus grand des plus petits coefficients d'appartenance des variables d'entrée (cf explicationS page 13 lignes 15-20 ci-dessus). Le poids de la zone 2 est défini de la même manière, le plus petit des coefficient d'appartenance étant 0,5.

La valeur de sortie quantifiée est représentée par l'abscisse du centre de gravité des trois surfaces retenues pour les zones 5, 3 et 2. Ces surfaces sont hachurées figure 7.

On notera que cette règle de "défusification" n'est pas la seule possible. En particulier, il serait possible d'affecter chaque zone d'un poids différent par unité de surface de façon par exemple à donner plus de poids aux zones extrêmes.

## Revendications

1. Procédé de contrôle de la valeur d'un couple de freinage d'une roue rotationnellement liée à un véhicule appuyant la roue sur une piste, les forces d'adhérence entre la roue et la piste étant capables de provoquer un couple de rotation de la roue opposé au couple de freinage dont la valeur maximum est à chaque instant une fonction d'un coefficient de glissement g de la roue sur la piste, la valeur de ce maximum étant représentable en fonction du coefficient de glissement par une courbe d'adhérence présentant elle-même en un point C un maximum M pour une valeur $g_o$ du coefficient de glissement, le procédé comportant :

   - le calcul de façon itérative, selon les principes de la logique floue d'une grandeur de sortie représentant un accroissement algébrique d'une valeur précédente du couple de freinage, cet accroissement étant ajouté à la valeur précédente du couple de freinage pour déterminer une valeur corrigée du couple de freinage, une première valeur du couple étant constituée par une valeur de commande, le calcul étant effectué à partir de trois grandeurs d'entrée comportant la valeur du coefficient de glissement de la roue sur la piste, une grandeur pente p représentant la dérivée du couple de freinage par rapport au glissement, une grandeur dgliss dérivée première du glissement par rapport au temps ;
   - la comparaison de la valeur corrigée du couple de freinage à la valeur de commande de ce couple ;
   - la limitation si nécessaire du dernier accroissement calculé pour qu'une valeur calculée du couple résultant de l'addition de l'accroissement calculé, éventuellement limité, soit au plus égal à la valeur de commande ;
   - l'application de la valeur calculée à un organe de freinage, le calcul, la comparaison, la limitation éventuelle et l'application intervenant à l'issue d'une phase préliminaire à l'utilisation du procédé comportant :
   - la fixation pour chaque grandeur d'entrée d'un nombre de plages qualitatives continues, et, d'un nombre de zones qualitatives continues pour la grandeur de sortie, chacune des plages ou zones comprenant toutes les valeurs allant d'une valeur minimum à une valeur maximum, ces deux valeurs constituant les extrémités de la plage ou zone ;
   - l'affectation d'un coefficient d'appartenance compris entre 0 et 1 à chaque valeur de chaque plage ou zone ;
   - l'affectation à chaque combinaison de trois plages que l'on peut constituer avec une plage de chacune des trois valeurs d'entrée d'un nombre identifiant une des zones qualitative de la valeur de sortie ;
   - l'affectation à chaque zone de la valeur de sortie d'un poids qui est une grandeur proportionnelle à une surface délimitée par un segment dont la longueur est égale à la longueur de la zone, une courbe représentant dans une direction perpendiculaire au segment la valeur du coefficient d'appartenance à la zone de chaque valeur du segment, et éventuellement par des perpendiculaires au segment menées à ses extrémités ;
   - la définition d'une règle pour déterminer une valeur quantifiée de sortie à partir des zones qualitatives désignées par chacune des combinaisons que l'on peut constituer avec une plage à laquelle appartient chacune des trois valeurs d'entrée mesurées au cours de l'exécution ultérieure du procédé, la règle stipulant que la valeur quantifiée est une fonction du poids de chacune des zones désignées et pour chacune d'elle d'un coefficient de poids qui est lui même une fonction des coefficients d'appartenances de chaque valeur réelle mesurée à la plage participant à la combinaison désignant la zone qualitative de sortie.

2. Procédé selon la revendication 1, dans lequel la grandeur d'entrée dgliss est répartie en deux plages une plage dgliss faible et une plage dgliss fort.

3. Procédé selon la revendication 1, dans lequel la grandeur pente est répartie en quatre plages qualitatives numérotées de 24 à 21 dont les valeurs algébriques milieux vont en croissant de la plage 24 à la plage 21.

4. Procédé selon la revendication 1, dans lequel la grandeur glissement est répartie en trois plages qualitatives numérotés de 33 à 31 dont les valeurs milieux vont en croissant de la plage 33 à la plage 31.

5. Procédé selon la revendication 1, dans lequel la grandeur de sortie est répartie en 7 zones numérotées de 7 à 1 dont les valeurs algébriques milieux vont en croissant de la zone 7 à la zone 1.

6. Procédé selon la revendication 1, dans lequel les zones de répartition de la grandeur de sortie comprennent deux zones incluant la valeur 0.

**7.** Procédé selon la revendication 1, dans lequel la valeur du coefficient de poids affecté à une zone désignée par une combinaison de plages qualitatives auxquelles appartiennent les valeurs réelles des grandeurs d'entrée est égal au plus petit des coefficients d'appartenance de chaque valeur réelle à sa plage, lorsque la zone est désignée une seule fois et au plus grand de ces plus petits coefficients dans chacune des combinaisons désignant la même zone lorsque cette zone est désignée plusieurs fois.

**8.** Procédé selon la revendication 1, dans lequel la valeur quantifiée de la grandeur de sortie est égale à l'abscisse du barycentre des centres de gravité d'une partie de surface définissant le poids de la zone, cette partie de surface étant une surface comprise entre l'axe des abscisses et une parallèle menée à cet axe à une distance égale au coefficient de poids affectant la zone désignée, chacune des zones occupant sa place sur l'axe des abscisses en fonction de ses valeurs d'extrémité.

**9.** Procédé selon la revendication 7, dans lequel la valeur quantifiée de la grandeur de sortie est égale à l'abscisse du barycentre des centres de gravité d'une partie de surface définissant le poids de la zone, cette partie de surface étant une surface comprise entre l'axe des abscisses et une parallèle menée à cet axe à une distance égale au coefficient de poids affectant la zone désignée, chacune des zones occupant sa place sur l'axe des abscisses en fonction de ses valeurs d'extrémité.

**10.** Procédé selon la revendication 1, dans lequel la phase préliminaire comporte en outre l'introduction d'au moins un paramètre qualifiant l'adhérence, les nombres de plages de chaque grandeur d'entrée et de zones des paramètres de sorties ainsi que les valeurs extrêmes des plages et des coefficients d'appartenance étant des fonctions de ces paramètres.

## Claims

**1.** Method for controlling the value of a braking torque of a wheel rotationally linked to a vehicle applying the wheel to a track, the forces of adherence between the wheel and the track being capable of prompting a rotation torque of the wheel that counters the braking torque, the maximum value of which is, at each instant, a function of a coefficient of slippage s of the wheel on the track, it being possible to represent the value of this maximum as a function of the coefficient of slippage by a curve of adherence itself having, at a point C, a maximum M for a value $s_o$ of the slippage coefficient, the method including:

- iterative computation, according to the principles of fuzzy logic, of an output magnitude representing an algebraic increase of a preceding value of the braking torque, this increase being added to the preceding value of the braking torque to determine a corrected value of the braking torque, a first value of the torque being constituted by a control value, the computation being done on the basis of three input magnitudes comprising the value of the coefficient of slippage of the wheel on the track, a slope magnitude sl representing the derivative of the braking torque with respect to the slippage, a magnitude dslip being the first derivative of the slippage with respect to time;
- comparison of the corrected value of the braking torque with the control value of this torque;
- limiting, if necessary, the last computed increase so that a computed value of the torque resulting from the addition of the computed increase, possibly limited, is at most equal to the control value;
- application of the computed value to a braking device,

the operations of computation, comparison, possible limiting and application taking place at the end of a phase preliminary to the use of the method, including:

- fixing, for each input magnitude, a number of continuous qualitative ranges and a number of continuous qualitative zones for the output magnitude, each of the ranges or zones comprising all the values ranging from a minimum value to a maximum value, these two values constituting the limits of the range or zone;
- assigning a coefficient of membership ranging from 0 to 1 to each value of each range or zone;
- assigning, to each combination of three ranges that can be constituted with a range of each of the three input values, a number identifying one of the qualitative zones of the output value;
- assigning to each zone of the output value, a weight which is a magnitude proportional to a surface demarcated by a segment whose length is equal to the length of the zone, by a curve representing, in a direction perpendicular to the segment, the value of the coefficient of membership of the zone of each value of the segment and, possibly, by perpendiculars to the segment that are taken to its ends;
- defining a rule for determining a quantified output value from qualitative zones designated by each of the combinations that can be constituted with a range to which there belongs each of the three input values, measured during the subsequent execution of the method, the rule stipulating that the quantified value is a function of the weight of each of the designated zones and, for each of them, a function of a coefficient of weight which is itself a function of the coefficients of membership of each actual measured value of the range participating in the combination that designates the output qualitative zone.

2. Method according to Claim 1, in which the input magnitude dslip is divided into two ranges, one low dslip range and one high dslip range.

3. Method according to Claim 1, in which the slope magnitude is divided into four qualitative ranges numbered from 24 to 21, the middle algebraic values of which increase from the range 24 to the range 21.

4. Method according to Claim 1, in which the slippage magnitude is divided into three qualitative ranges numbered from 33 to 31, the middle values of which increase from the range 33 to the range 31.

5. Method according to Claim 1, in which the output magnitude is divided into 7 zones numbered from 7 to 1, the middle algebraic values of which increase from the zone 7 to the zone 1.

6. Method according to Claim 1, in which the zones of division of the output magnitude comprise two zones including the value 0.

7. Method according to Claim 1, in which the value of the coefficient of weight assigned to a zone designated by a combination of qualitative ranges to which the actual values of the input magnitudes belong is equal to the smallest of the coefficients of membership of each real value to its range when the zone is designated only once, and to the greatest of these smallest coefficients in each of the combinations designating the same zone when this zone is designated several times.

8. Method according to Claim 1, in which the quantified value of the output magnitude is equal to the x-axis value of the barycentre of the centres of gravity of a part of a surface defining the weight of the zone, this part of a surface being a surface lying between the x-axis and a parallel taken to this axis at a distance equal to the coefficient of weight assigned to the designated zone, each of the zones occupying its position on the x-axis as a function of its limit values.

9. Method according to Claim 7, in which the quantified value of the output magnitude is equal to the x-axis value of the barycentre of the centres of gravity of a part of a surface defining the weight of the zone, this part of a surface being a surface lying between the x-axis and a parallel taken to this axis at a distance equal to the coefficient of weight assigned to the designated zone, each of the zones occupying its position on the x-axis as a function of its limit values.

10. Method according to Claim 1, in which the preliminary phase further includes the introduction of at least one parameter qualifying the adherence, the numbers of ranges of each input magnitude and of zones of the output parameters as well as the limit values of the ranges and of the coefficients of membership being functions of these parameters.

## Patentansprüche

1. Verfahren zur Kontrolle des Werts eines Bremsmoments für ein an einem Fahrzeug drehbar befestigtes Rad, wobei das Fahrzeug das Rad auf eine Bahn drückt und die Haftkräfte zwischen dem Rad und der Bahn ein Drehmoment des Rads hervorrufen können, das dem Bremsmoment entgegengesetzt ist und dessen Höchstwert in jedem Augenblick von einem Gleitkoeffizienten g des Rads auf der Bahn abhängt, und wobei der Wert dieses Höchstwerts abhängig vom Gleitkoeffizienten durch eine Haftkurve dargestellt werden kann, die ihrerseits in einem Punkt C einen Höchstwert M für einen Wert $g_o$ des Gleitkoefffizienten besitzt, wobei das Verfahren folgende Schritte aufweist:

- nach den Prinzipien der unscharfen Logik erfolgt eine iterative Berechnung einer Ausgangsgröße, die eine algebraische Zunahme eines vorhergehenden Werts des Bremsmoments darstellt, wobei diese Zunahme zum vorhergehenden Wert des Bremsmoments hinzugefügt wird, um einen korrigierten Wert des Bremsmoments zu bestimmen, und wobei ein erster Drehmomentwert von einem Steuerwert gebildet wird und die Berechnung ausgehend von drei Eingangsgrößen erfolgt, zu denen der Wert des Gleitkoeffizienten des Rads auf der Bahn, eine Steigungsgröße p, die die Ableitung des Bremsmoments bezüglich des Gleitwerts darstellt, und eine Größe dgliss gehören, die die erste Ableitung des Gleitwerts bezüglich der Zeit bildet:
- der korrigierte Wert des Bremsmoments wird mit dem Steuerwert dieses Moments verglichen;

- wenn nötig, wird die letzte berechnete Erhöhung begrenzt, damit ein berechneter Wert des Moments aufgrund der Addition der berechneten Erhöhung nach einer eventuellen Begrenzung den Steuerwert nicht übersteigt;
- der berechnete Wert gelangt an ein Bremsorgan, wobei die Berechnung, der Vergleich und die eventuelle Begrenzung sowie die Anwendung des berechneten Werts nach einer die Verwendung des Verfahrens vorbereitenden Phase erfolgt, die folgende Schritte aufweist:
- für jede Eingangsgröße wird eine Anzahl von kontinuierlichen qualitativen Bereichen und für jede Ausgangsgröße eine Anzahl von kontinuierlichen qualitativen Zonen festgelegt, wobei jeder Bereich oder jede Zone alle Werte von einem Mindestwert bis zu einem Höchstwert umfaßt und diese beiden Werte die Endwerte des Bereichs oder der Zone bilden;
- ein Zugehörigkeitskoeffizient zwischen 0 und 1 wird jedem Wert jedes Bereichs oder jeder Zone zugeordnet;
- jeder Kombination von drei Bereichen, die man bilden kann, mit einem Bereich jedes der drei Eingangswerte wird eine Zahl zugewiesen, die eine der qualitativen Zonen des Ausgangswerts identifiziert;
- jeder Zone des Ausgangswerts wird ein Gewicht zugewiesen, also eine Größe, die zur Fläche proportional ist, welche durch ein Segment mit einer Länge gleich der Länge der Zone, durch eine Kurve, die in einer Richtung senkrecht zum Segment den Wert des Zugehörigkeitskoeffizienten jedes Werts des Segments zu der Zone angibt, und ggf. durch zu dem Segment an dessen Enden senkrecht verlaufende Gerade begrenzt ist;
- man definiert eine Regel, um einen quantifizierten Ausgangswert ausgehend von qualitativen Zonen zu bestimmen, die durch jede der Kombinationen bezeichnet werden, die man mit einem Bereich bilden kann, zu dem jeder der drei während der späteren Ausführung des Verfahrens gemessenen Eingangswerte gehört, wobei die Regel angibt, daß der quantifizierte Wert vom Gewicht jeder bezeichneten Zone und für jede der Zonen von einem Gewichtskoeffizienten abhängt, der seinerseits von den Zugehörigkeitskoeffizienten jedes gemessenen realen Werts in dem Bereich abhängt, der an der die qualitative Ausgangszone bezeichnenden Kombination teilhat.

2. Verfahren nach Anspruch 1, bei dem die Eingangsgröße dgliss in zwei Bereiche, einen Bereich dgliss-schwach und einen Bereich dgliss-stark, aufgeteilt ist.

3. Verfahren nach Anspruch 1, bei dem die Steigungsgröße in vier qualitative Bereiche (24 bis 21) aufgeteilt ist, deren algebraische Mittelwerte vom Bereich (24) zum Bereich (21) zunehmen.

4. Verfahren nach Anspruch 1, bei dem der Gleitwert in drei qualitative Bereiche (33 bis 31) aufgeteilt ist, deren Mittelwerte vom Bereich (33) zum Bereich (31) zunehmen.

5. Verfahren nach Anspruch 1, bei dem die Ausgangsgröße in sieben Zonen (7 bis 1) aufgeteilt ist, deren algebraische Mittelwerte von der Zone (7) zur Zone (1) zunehmen.

6. Verfahren nach Anspruch 1, bei dem die Zonen der Verteilung der Ausgangsgröße zwei den Wert 0 einschließende Zonen enthalten.

7. Verfahren nach Anspruch 1, bei dem der Wert des Gewichtskoeffizienten einer Zone, die durch eine Kombination von qualitativen Bereichen bezeichnet ist, zu denen der reale Wert der Eingangsgröße gehört, dem kleinsten der Zugehörigkeitskoeffizienten jedes realen Werts zu seinem Bereich gleicht, wenn die Zone ein einziges Mal bezeichnet ist, bzw. dem größten dieser kleinsten Koeffizienten in jeder der die gleiche Zone bezeichnenden Kombinationen gleicht, wenn diese Zone mehrfach bezeichnet ist.

8. Verfahren nach Anspruch 1, bei dem der quantifizierte Wert der Ausgangsgröße der Abszisse des Schwerpunkts eines Teils der Fläche gleicht, die das Gewicht der Zone definiert, wobei dieser Teil der Fläche eine Fläche ist, die zwischen der Abszissenachse und einer zu dieser Achse in einem Abstand gleich dem die bezeichnete Zone betreffenden Gewichtskoeffizienten gezogenen Parallele liegt und jede dieser Zonen ihren Platz auf der Abszissenachse abhängig von ihren Endwerten einnimmt.

9. Verfahren nach Anspruch 7, bei dem der quantifizierte Wert der Ausgangsgröße der Abszisse des Schwerpunkts eines Teils der Fläche gleicht, die das Gewicht der Zone definiert, wobei dieser Teil der Fläche eine Fläche ist, die zwischen der Abszissenachse und einer zu dieser Achse in einem Abstand gleich dem die bezeichnete Zone betreffenden Gewichtskoeffizienten gezogenen Parallele liegt und jede dieser Zonen ihren Platz auf der Abszissenachse abhängig von ihren Endwerten einnimmt.

10. Verfahren nach Anspruch 1, bei dem die vorbereitende Phase außerdem die Einführung mindestens eines die Haftung qualifizierenden Parameters enthält, wobei die Anzahl der Bereiche jeder Eingangsgröße und von Zonen der Ausgangsparameter sowie die Endwerte der Bereiche und der Zugehörigkeitskoeffizienten von diesen Parametern abhängen.

FIG.1b

FIG.1a

VARIABLE GLISSEMENT

FIG.2a

FIG.2b

FIG.2c

EP 0 592 288 B1

VARIABLE PENTE

FIG.3a

FIG.3b

FIG.3c

FIG.3d

EP 0 592 288 B1

VARIABLE DELTA-GLISSEMENT

FIG.4a

FIG.4b

FIG.5a

FIG.5b

FIG.5c

FIG.5d

FIG.5e

FIG.5f

FIG.5g

| pente glissement | 21 | 22 | 23 | 24 |
|---|---|---|---|---|
| 33 | 1 | 2 0,8  0,5 | 3 0,8  0,3 | 4 |
| 32 | 5 | 5 0,2  0,5 | 5 0,2  0,3 | 5 |
| 31 | 6 | 6 | 6 | 6 |

## FIG.6

## FIG.7